# EUROPEAN PATENT APPLICATION

(11) **EP 4 668 443 A1**
(43) Date of publication of application: **24.12.2025**
(21) Application number: 24788923.1
(22) Date of filing: 25.03.2024
(51) Int. Cl.: H01M 50/258, H01M 50/296, H01R 13/58, H01R 13/64, H01M 50/251

(54) **ENERGY STORAGE SYSTEM**

(30) Priority: 14.04.2023 KR 20230049398; 31.08.2023 KR 20230115084
(71) Applicant: LG Energy Solution, Ltd., Seoul 07335 (KR)
(72) Inventor: YOON, Sang Hyun, Daejeon 34122 (KR); LEE, Hye Jun, Siheung-si Gyeonggi-do 15084 (KR); LEE, Chang Ho, Siheung-si Gyeonggi-do 15084 (KR); JUNG, Sang Eun, Daejeon 34122 (KR); KIM, Sung Gyu, Daejeon 34122 (KR)
(74) Representative: Plasseraud IP
(86) International application number: PCT/KR2024/003697
(87) International publication number: WO 2024/214980

(57) **Abstract**

An energy storage system according to an embodiment of the present disclosure may include a first battery module assembly and a second battery module assembly mounted on the first battery module assembly, wherein the first battery module assembly may include a module guide provided to guide the mounting with the second battery module assembly.

## Description

### TECHNICAL FIELD

### CROSS-REFERENCE TO RELATED APPLICATIONS

The present application claims priority to Korean Patent Application No. 10-2023-0049398 filed on April 14, 2023 and Korean Patent Application No. 10-2023-0115084 filed on August 31, 2023 in the Republic of Korea, the disclosures of which are incorporated herein by reference.

### TECHNICAL FIELD

The present disclosure relates to an energy storage system.

### BACKGROUND ART

To meet the growing demand for new energy sources as an alternative to oil resources that will fall short and solve the environmental pollution problem that gradually gets worse, research and development efforts are devoted to energy production based on eco-friendly energy sources. Particularly, many studies have been conducted on secondary batteries that can be repeatedly recharged, and research is being made in various aspects of secondary batteries such as materials, structures, processes and stability.

Secondary batteries may be managed for each module or pack, and modules or packs including secondary batteries may be electrically connected through a connector. Particularly, to effectively manage an energy storage system including secondary batteries, it is necessary to smoothly send and receive power and control signals using the connector.

According to the related art, the module or the connector may be damaged by repeated demounting and mounting, or the internal components of the connector may be detached by external forces.

### SUMMARY

### TECHNICAL PROBLEM

The present disclosure is directed to providing an energy storage system for achieving stable and effective assembly.

### TECHNICAL SOLUTION

An energy storage system according to an embodiment of the present disclosure may include a first battery module assembly and a second battery module assembly mounted on the first battery module assembly, wherein the first battery module assembly may include a module guide provided to guide the mounting with the second battery module assembly.

### ADVANTAGEOUS EFFECTS

According to a preferred embodiment of the present disclosure, it may be possible to enhance assembly stability of the energy storage system.

According to a preferred embodiment of the present disclosure, it may be possible to enhance assembly convenience of the energy storage system.

### BRIEF DESCRIPTION OF THE DRAWINGS

FIG. 1 is an exploded perspective view of an energy storage system according to an embodiment of the present disclosure.
FIG. 2 is a perspective view showing an assembly of battery module assemblies according to an embodiment of the present disclosure.
FIG. 3 is a cross-sectional view showing pre-mounted battery module assemblies according to an embodiment of the present disclosure.
FIG. 4 is a cross-sectional view showing a certain point of time when terminals are being coupled according to an embodiment of the present disclosure.
FIG. 5 is a cross-sectional view showing coupled terminals according to an embodiment of the present disclosure.
FIG. 6 is a perspective view showing a connector assembly in a coupled state according to an embodiment of the present disclosure.
FIG. 7 is an exploded perspective view of a second connector according to an embodiment of the present disclosure.
FIG. 8 is an exploded perspective view of a first connector according to an embodiment of the present disclosure.
FIG. 9 is an exploded perspective view showing a terminal block of a first connector according to an embodiment of the present disclosure.
FIG. 10 is a perspective view showing a terminal block of a first connector according to an embodiment of the present disclosure.
FIG. 11 is a plan view of a first connector housing according to an embodiment of the present disclosure when viewed from one direction.
FIG. 12 is a cross-sectional view of a first connector according to an embodiment of the present disclosure.
FIG. 13 is a cross-sectional view showing a first locking structure for first high voltage of a first connector according to an embodiment of the present disclosure.
FIG. 14 is a cross-sectional view showing a second locking structure for first high voltage of a first connector according to an embodiment of the present disclosure.
FIG. 15 is a conceptual view showing a first locking structure and a second locking structure for first low voltage of a first connector according to an embodiment of the present disclosure.
FIG. 16 is an exploded perspective view showing a connector assembly according to an embodiment of the present disclosure.
FIG. 17 is a perspective view showing a first connector housing according to an embodiment of the present disclosure.
FIG. 18 is a plan view showing a first connector housing according to an embodiment of the present disclosure when viewed from above.
FIG. 19 is a perspective view showing a second connector housing according to an embodiment of the present disclosure.
FIG. 20 is a plan view showing a second connector housing according to an embodiment of the present disclosure when viewed from above.
FIG. 21 is a perspective view showing an inclined portion of a second connector housing according to an embodiment of the present disclosure.
FIG. 22 is a conceptual view showing sliding of a first connector and a second connector according to an embodiment of the present disclosure.
FIG. 23 is a perspective view showing a holding member mounted in a first connector housing according to an embodiment of the present disclosure.
FIG. 24 is a conceptual view showing a holding member mounted in a first connector housing according to an embodiment of the present disclosure.
FIG. 25 is a partial enlarged view showing a holding member mounted in a first connector housing according to an embodiment of the present disclosure.
FIG. 26 is an exploded perspective view showing a terminal block for first high voltage and a terminal for first high voltage according to an embodiment of the present disclosure.
FIG. 27 is a perspective view showing a terminal block for first high voltage and a terminal for first high voltage in a coupled state according to an embodiment of the present disclosure.
FIG. 28 is a perspective view showing a terminal block mount portion of a first connector housing according to an embodiment of the present disclosure.
FIG. 29 is a bottom view showing a terminal block mount portion of a first connector according to an embodiment of the present disclosure.
FIG. 30 is a conceptual view showing a first connector mounted in a first connector mount portion according to an embodiment of the present disclosure.
FIG. 31 is a bottom view showing a terminal block mount portion of a second connector according to an embodiment of the present disclosure.
FIG. 32 is a conceptual view showing a second connector mounted in a second connector mount portion according to an embodiment of the present disclosure.

### DETAILED DESCRIPTION

Hereinafter, preferred embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

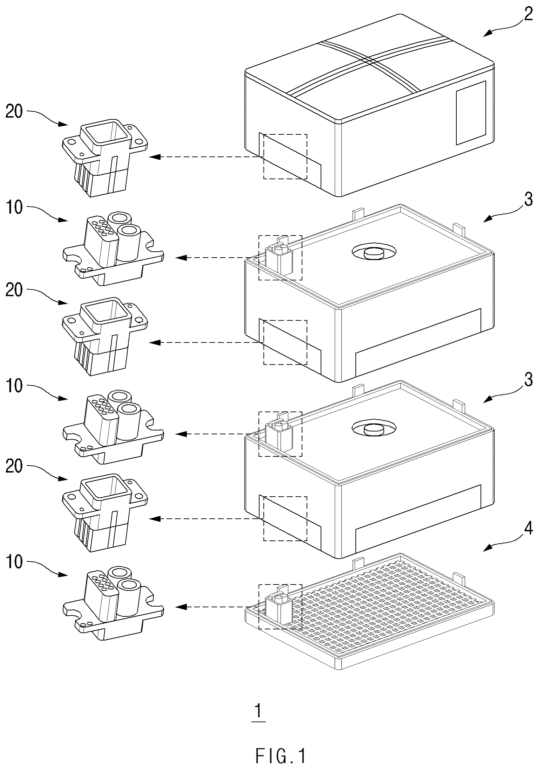

FIG. 1 is an exploded perspective view of an energy storage system according to an embodiment of the present disclosure.

The energy storage system 1 may include a battery control unit 2. The battery control unit 2 may control the entire energy storage system 1.

The energy storage system 1 may include a battery module assembly 3. The battery module assembly 3 may be an assembly including battery modules or batteries therein. The battery module assembly 3 may be provided in plurality.

The energy storage system 1 may include a bottom plate assembly 4. The bottom plate assembly 4 may form a bottom boundary of the energy storage system 1.

The energy storage system 1 may include the battery module assemblies 3 stacked on the bottom plate assembly 4 and the battery control unit 2 stacked on the battery module assembly 3.

The energy storage system 1 may include a first connector 10 and a second connector 20. For example, the first connector 10 and the second connector 20 may electrically connect the bottom plate assembly 4, the battery module assemblies 3 and the battery control unit 2 stacked on top of each other.

Specifically, for example, the first connector 10 and the second connector 20 may be disposed at an upper part and a lower part of each of the battery module assemblies 3. In this instance, the first connector 10 may be disposed in the bottom plate assembly 4, and the second connector 20 may be disposed in the battery control unit 2. However, the present disclosure is not limited thereto.

As in the above-described example of the energy storage system 1, the bottom plate assembly 4, the battery module assemblies 3 and the battery control unit 2 may be electrically connected by the first connector 10 and the second connector 20.

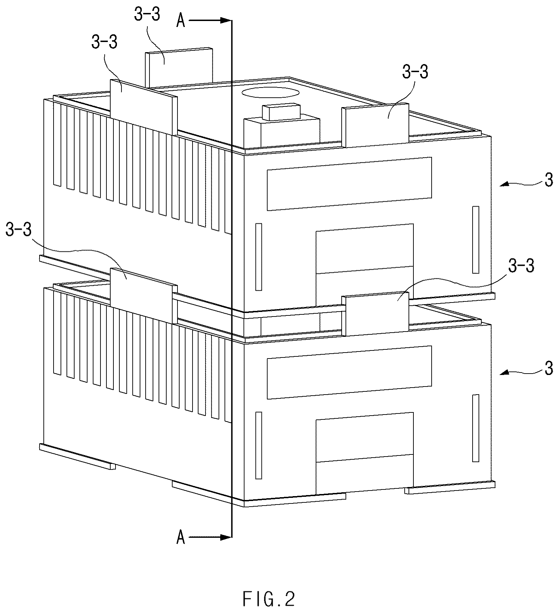

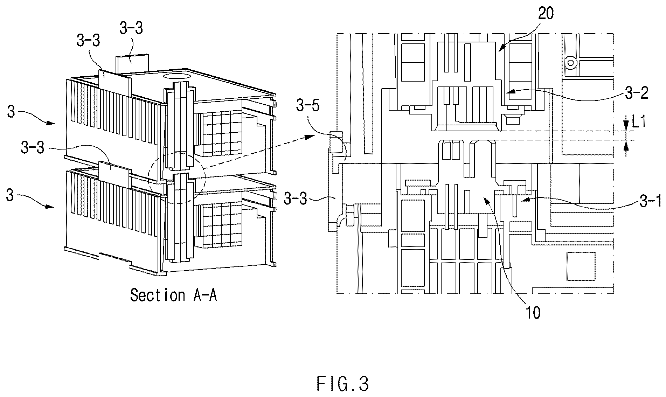

FIG. 2 is a perspective view showing the assembly of the battery module assemblies according to an embodiment of the present disclosure, and FIG. 3 is a cross-sectional view showing the pre-mounted battery module assemblies according to an embodiment of the present disclosure.

The energy storage system 1 may include the plurality of battery module assemblies 3. For convenience of description, a lower battery module assembly of two battery module assemblies 3 may be defined as a first battery module assembly and an upper battery module assembly may be defined as a second battery module assembly.

For example, the energy storage system 1 may include the first battery module assembly and the second battery module assembly mounted on the first battery module assembly.

The first connector 10 may be mounted in a first connector mount portion 3-1 of the first battery module assembly. The second connector 20 may be mounted in a second connector mount portion 3-2 of the second battery module assembly.

The first battery module assembly may include a module guide 303. The module guide 3-3 may be provided to guide the mounting with the second battery module assembly.

The module guide 3-3 may be provided in plurality.

Describing in detail using an example, the first battery module assembly may be in a shape of a rectangular prism. In this instance, the module guide 3-3 may be formed at two or more of the edges of the first battery module assembly when viewed from above.

The module guide 3-3 may be formed at the edge of the first battery module assembly. The module guide 3-3 may extend in an upward direction from the edge of the first battery module assembly.

The second battery module assembly may include a guide mount portion 3-5. The guide mount portion 3-5 may be provided to mount the module guide 3-3.

The guide mount portion 3-5 may be provided in plurality. For example, the module guide 3-3 may include the plurality of module guides 3-3 extending in the upward direction from the edge of the first battery module assembly, and the second battery module assembly may include the guide mount portions 3-5 where the module guides 3-3 are mounted.

The battery module assembly 3 may include both the module guide 3-3 and the guide mount portion 3-5. For example, the module guide 3-3 may be formed at the upper edge of the battery module assembly 3, and the guide mount portion 3-5 may be formed at the lower edge. In this case, it may be easy to stack the battery module assemblies 3 of the same shape.

The locations at which the module guide 3-3 and the guide mount portion 3-5 are formed are not limited to the above-described locations.

The first battery module assembly may include the first connector 10 exposed upwards for electrical connection to the second battery module assembly.

The second battery module assembly may include the second connector 20 exposed downwards for electrical connection to the first battery module assembly.

The first connector 10 and the second connector 20 may be electrically connected to each other.

The first connector 10 and the second connector 20 may be spaced apart from each other at a predetermined distance L1 when the module guide 3-3 is pre-mounted in the guide mount portion 3-5. The predetermined distance L1 may be in a range between 4 mm and 5 mm, but is not limited thereto.

As described above, when the module guide 3-3 is pre-mounted in the guide mount portion 3-5, the first connector 10 and the second connector 20 are spaced apart from each other at the predetermined distance L1, so it may be possible to prevent damage caused by collision between the first connector 10 and the second connector 20.

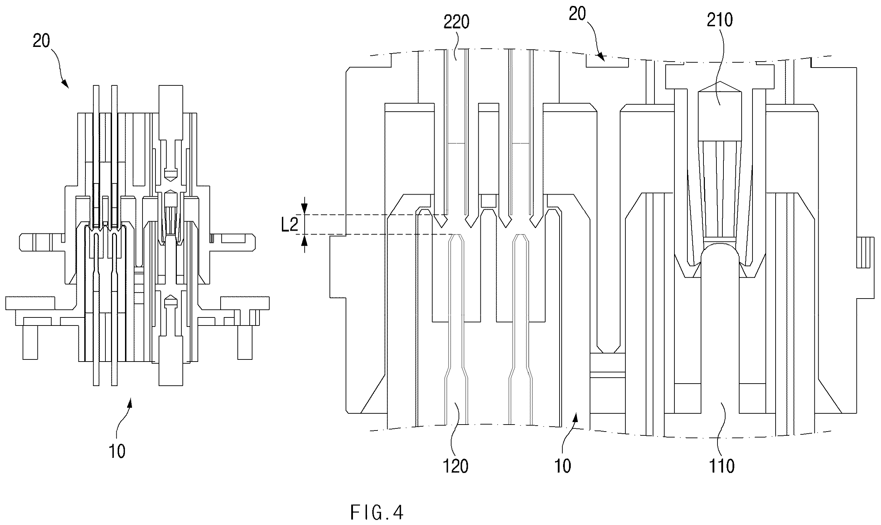

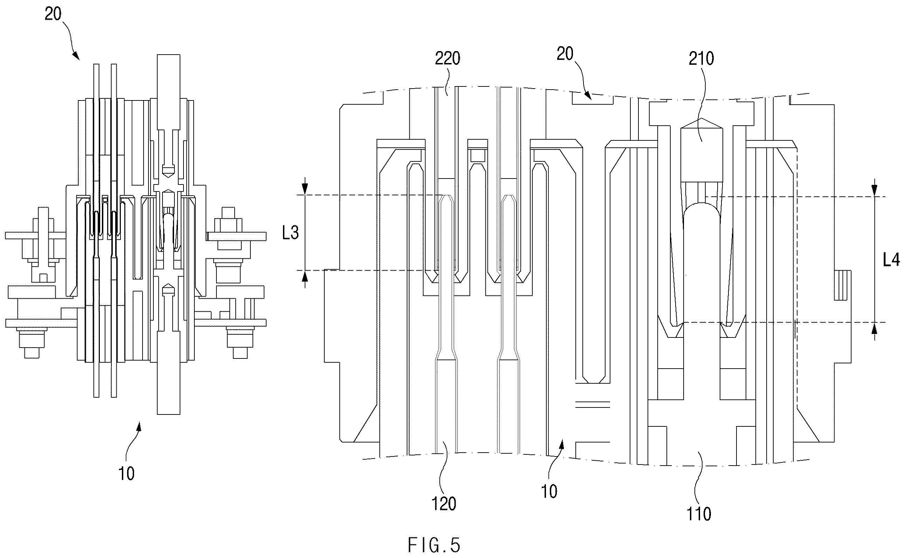

FIG. 4 is a cross-sectional view showing a certain point of time when terminals are being coupled according to an embodiment of the present disclosure, and FIG. 5 is a cross-sectional view showing coupled terminals according to an embodiment of the present disclosure.

After the pre-mounting, the mounting of the first connector 10 and the second connector 20 may be completed by the weight of the second battery module assembly. For example, after the pre-mounting, the first connector 10 and the second connector 20 may be fastened by the load of the second battery module assembly pre-mounted on the first battery module assembly.

The first connector 10 may include a terminal for first high voltage 110 and a terminal for first low voltage 120.

The second connector 20 may include a terminal for second high voltage 210 and a terminal for second low voltage 220.

When the terminal for first high voltage 110 and the terminal for second high voltage 210 come into contact with each other, the terminal for first low voltage 120 and the terminal for second low voltage 220 may be spaced apart from each other at a predetermined distance L2. The predetermined distance L2 at which the terminal for first low voltage 120 and the terminal for second low voltage 220 are spaced apart from each other may be in a range between 1 mm and 1.5 mm, but is not limited thereto.

The terminal for first high voltage 110 and the terminal for second high voltage 210 may have a larger radius than the terminal for first low voltage 120 and the terminal for second low voltage 220, respectively.

The terminal for first high voltage 110 and the terminal for second high voltage 210 may have higher rigidity than the terminal for first low voltage 120 and the terminal for second low voltage 220, respectively.

The terminal for first high voltage 110 may be inserted into the terminal for second high voltage 210 before the terminal for second low voltage 220 is inserted into the terminal for first low voltage 120.

As described above, since the terminal for first high voltage 110 is inserted into the terminal for second high voltage 210 before the terminal for second low voltage 220 is inserted into the terminal for first low voltage 120, the terminals for high voltage having higher rigidity and larger radius may be coupled first, and then the terminals for low voltage having relatively lower rigidity may be coupled. Accordingly, damage of the terminals may be prevented. Additionally, the terminals for high voltage may be inserted first and thus guide the terminals for low voltage.

When the terminal for first high voltage 110 is completely inserted into the terminal for second high voltage 210, an overlap length may be in a range between 4 mm and 5 mm. Additionally, when the terminal for first low voltage 120 is completely inserted into the terminal for second low voltage 220, an overlap length may be in a range between 3.5 mm and 4 mm. The above-described numerical range is provided by way of example, and is not limited thereto.

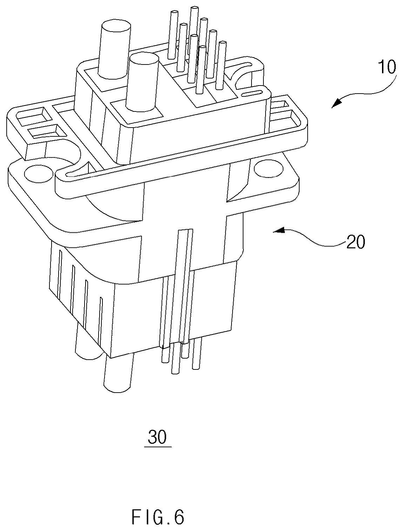

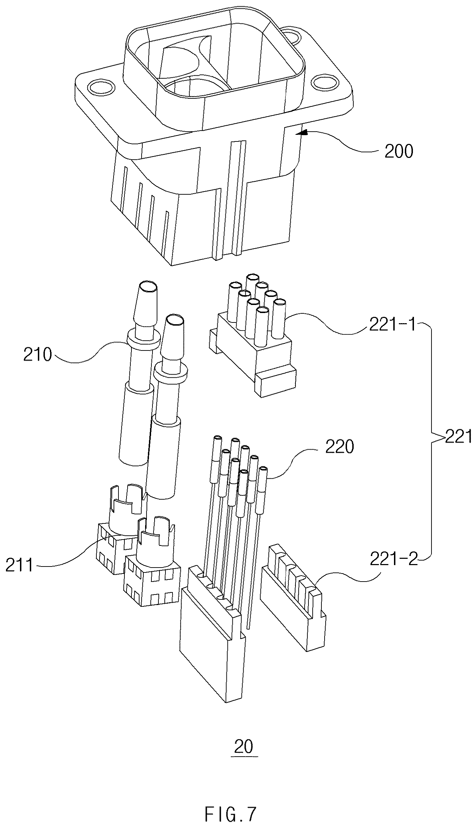

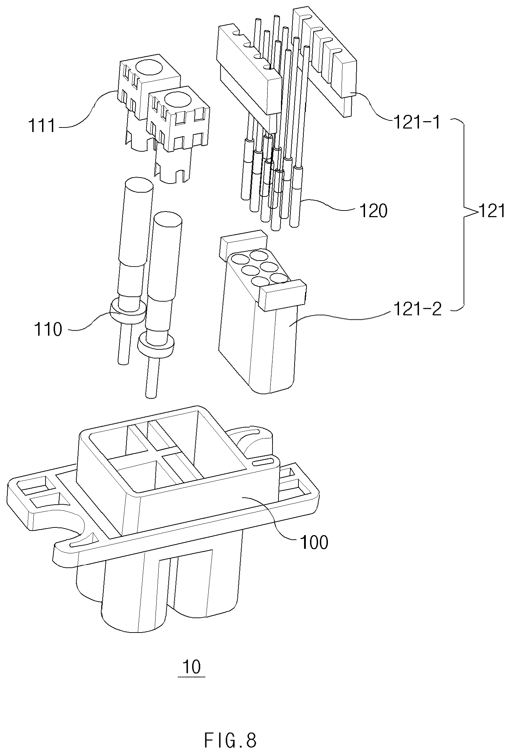

FIG. 6 is a perspective view showing a connector assembly in a coupled state according to an embodiment of the present disclosure, FIG. 7 is an exploded perspective view of the second connector according to an embodiment of the present disclosure, and FIG. 8 is an exploded perspective view of the first connector according to an embodiment of the present disclosure. The description of the above-described embodiments may be equally or similarly applied to this embodiment.

The first connector 10 and the second connector 20 may be coupled to form the connector assembly 30.

The second connector 20 may include a second connector housing 200. The second connector housing 200 may form a boundary of the second connector 20.

The second connector 20 may include the terminals 210, 220. The terminals 210, 220 may be inserted into the second connector housing 200 in a predetermined insertion direction.

The second connector 20 may include terminal blocks 211, 221.

The terminal blocks 211, 221 may be inserted into the second connector housing 200, surround the terminals 210, 220, and be configured to limit the movement of the terminals 210, 220 in a direction opposite to the insertion direction. The second connector housing 200 may have a protruding portion to lock the terminal blocks 211, 221.

The terminals 210, 220 may include the terminal for second high voltage 210 and the terminal for second low voltage 220.

The terminal blocks 211, 221 may include the terminal block for second high voltage 211 and the terminal block for second low voltage 221.

The terminal block for second low voltage 221 may include an upper block for second low voltage 221-1 and a lower block for second low voltage 221-2.

The first connector 10 may include a first connector housing 100. The first connector housing 100 may form a boundary of the first connector 10.

The first connector 10 may include the terminals 110, 120. The terminals 110, 120 may be inserted into the first connector housing 100 in a predetermined insertion direction.

The first connector 10 may include terminal blocks 111, 121.

The terminal blocks 111, 121 may be inserted into the first connector housing 100, surround the terminals 110, 120, and be configured to limit the movement of the terminals 110, 120 in a direction opposite to the insertion direction. The first connector housing 100 may have a protruding portion to lock the terminal blocks 111, 121.

The terminals 110, 120 may include the terminal for first high voltage 110 and the terminal for first low voltage 120.

The terminal blocks 111, 121 may include the terminal block for first high voltage 111 and the terminal block for first low voltage 121.

The terminal block for first low voltage 121 may include an upper block for first low voltage 121-1 and a lower block for first low voltage 121-2.

The description of the first connector 10 to be described below may be equally or similarly applied to the second connector 20.

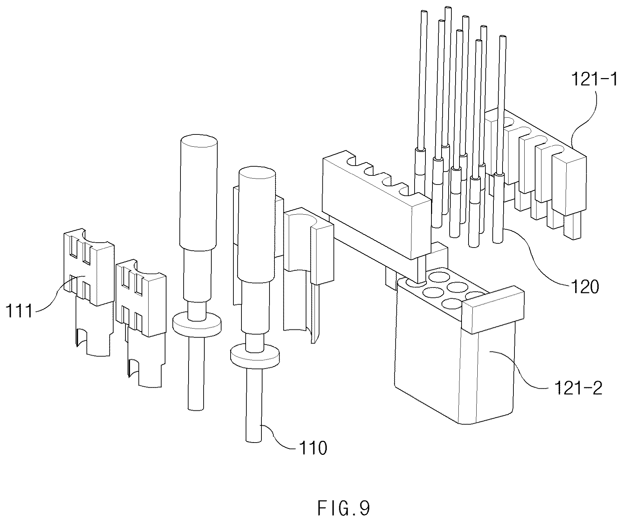

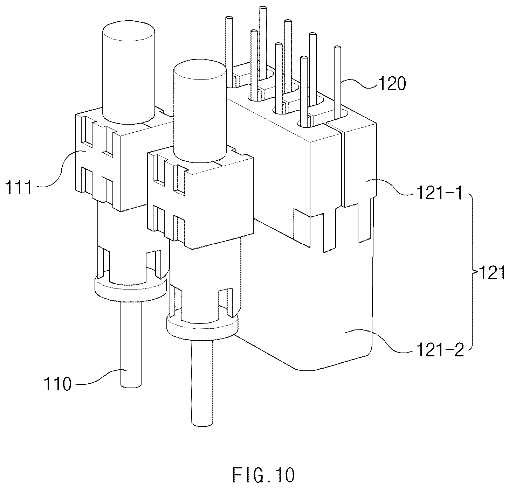

FIG. 9 is an exploded perspective view showing the terminal block of the first connector according to an embodiment of the present disclosure, and FIG. 10 is a perspective view showing the terminal block of the first connector according to an embodiment of the present disclosure. The description of the above-described embodiments may be equally or similarly applied to this embodiment.

The first connector 10 may include the terminal block for first high voltage 111 and the terminal block for first low voltage 121.

The terminal block for first high voltage 111 may be configured to surround the terminal for first high voltage 110.

The terminal block for first low voltage 121 may include the upper block for first low voltage 121-1 and the lower block for first low voltage 121-2.

The lower block for first low voltage 121-2 may be configured to surround the terminal for first low voltage 120.

The upper block for first low voltage 121-1 may be stacked on the lower block for first low voltage 121-1 and configured to support the lower block for first low voltage 121-1 on the outer side to limit the movement of the lower block for first low voltage 121-1 in the direction opposite to the insertion direction when the lower block for first low voltage 121-1 is inserted into the first connector housing 10.

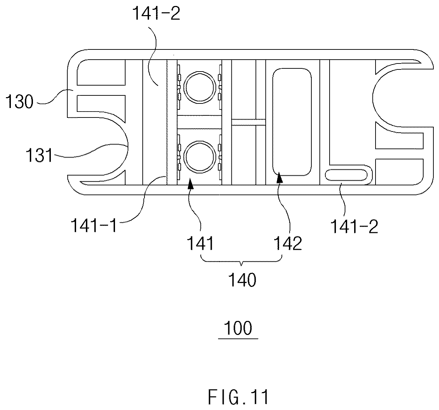

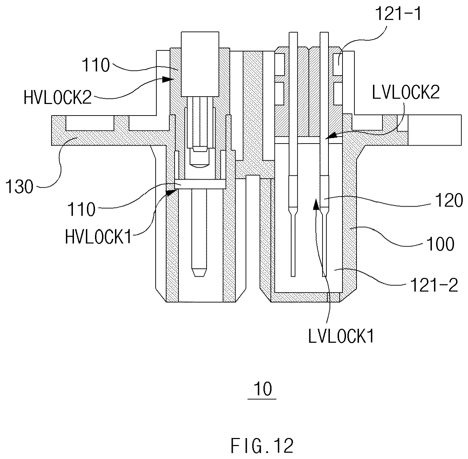

FIG. 11 is a plan view of the first connector housing according to an embodiment of the present disclosure when viewed from one direction. FIG. 12 is a cross-sectional view of the first connector according to an embodiment of the present disclosure. The description of the above-described embodiments may be equally or similarly applied to this embodiment.

The first connector housing 100 may include a terminal block mount portion 140.

The terminal block mount portion 140 may include a terminal block mount portion for first high voltage 141 and a terminal block mount portion for first low voltage 142.

The terminal block mount portion for first low voltage 142 may be provided so that the terminal for first low voltage 120 is inserted in a predetermined insertion direction.

The terminal block for first low voltage 121 may be inserted into the terminal block mount portion for first low voltage 142, while surrounding the terminal for first low voltage 120.

The terminal block for first low voltage 121 may include the upper block for first low voltage 121-1 and the lower block for first low voltage 121-2.

The lower block for first low voltage 121-2 may be disposed at the inside of the terminal block mount portion for first low voltage 142, while surrounding the terminal for first low voltage 120.

The upper block for first low voltage 121-1 may be stacked on the lower block for first low voltage 121-2 and configured to support the lower block for first low voltage 121-2 on the outer side to limit the movement of the lower block for first low voltage 121-2 in the direction opposite to the insertion direction when the lower block for first low voltage 121-2 is inserted into the first connector housing 100.

The first connector 10 may include the terminal block mount portion for first high voltage 141. For example, the terminal block mount portion for first high voltage 141 may be formed in the first connector housing 100.

The first connector 10 may include the terminal for first high voltage 110. The terminal for first high voltage 110 may be inserted into the terminal block mount portion for first high voltage 141 in a predetermined insertion direction.

The first connector 10 may include the terminal block for first high voltage 111. The terminal block for first high voltage 111 may be inserted into the terminal block mount portion for first high voltage 141, while surrounding the terminal for first high voltage 110.

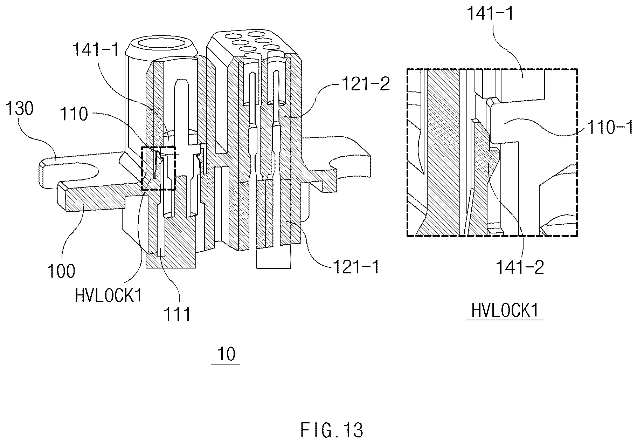

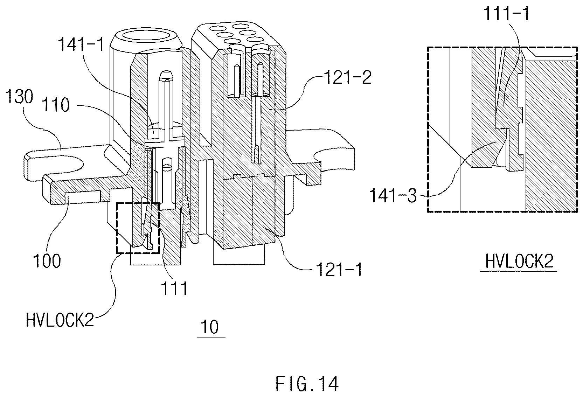

FIG. 13 is a cross-sectional view showing a first locking structure for first high voltage of the first connector according to an embodiment of the present disclosure. FIG. 14 is a cross-sectional view showing a second locking structure for first high voltage of the first connector according to an embodiment of the present disclosure. The description of the above-described embodiments may be equally or similarly applied to this embodiment.

The first connector housing 100 may include a stopper portion 141-1. The stopper portion 141-1 may support the terminal for first high voltage 110 to prevent it from entering in the insertion direction more than a predetermined extent.

The first connector housing 100 may include a first protruding portion 141-2. The first protruding portion 141-2 may protrude in the inward direction of the first connector housing 100 to limit the movement of the terminal block for first high voltage 111 in the direction opposite to the insertion direction.

The first connector housing 100 may include a second protruding portion 141-3. The second protruding portion 141-3 may protrude in the inward direction of the first connector housing 100 to limit the movement of the terminal for first high voltage 110 in the direction opposite to the insertion direction.

The terminal for first high voltage 110 may include a protruding portion 110-1. The protruding portion 110-1 may protrude in a direction perpendicular to the direction of insertion into the first connector housing 100. For example, the protruding portion 110-1 of the terminal for first high voltage 110 may protrude outwards so that it may come into contact with the second protruding portion 141-3. The second protruding portion 141-3 may protrude in the inward direction of the first connector housing 100 to lock the protruding portion 110-1. The protruding portion 110-1 may be understood as a terminal protruding portion.

The terminal block for first high voltage 111 may have a block protruding portion 111-1 that protrudes outwards. For example, the block protruding portion 111-1 may protrude outwards so that it may come into contact with the first protruding portion 141-2. Specifically, for example, the first protruding portion 141-2 may protrude in the inward direction of the first connector housing 100 so that it may come into contact with the block protruding portion 111-1 to suppress the movement of the terminal block for first high voltage 111 when a force acts in the direction opposite to the direction of insertion into the first connector housing 100.

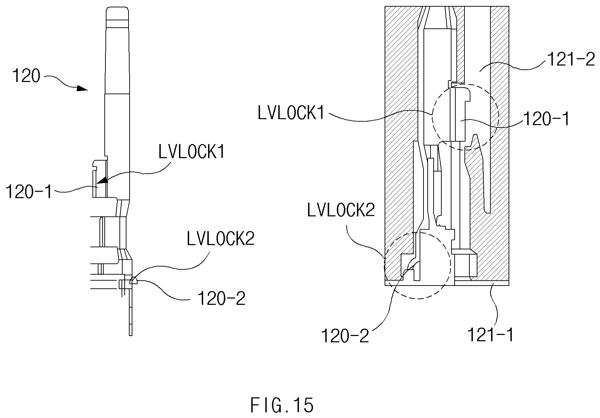

FIG. 15 is a conceptual view showing the first locking structure and the second locking structure for first low voltage of the first connector according to an embodiment of the present disclosure. The description of the above-described embodiments may be equally or similarly applied to this embodiment.

The terminal for first low voltage 120 may have a protruding portion 120-1 that protrudes in a direction perpendicular to the direction of insertion into the first connector housing 100. The protruding portion 120-1 may also be understood as a terminal protruding portion. The protruding portion 120-1 may protrude toward the terminal block for first low voltage 121 so that it may come into contact with the terminal block for first low voltage 121. Specifically, for example, the protruding portion 120-1 may protrude in the direction perpendicular to the direction of insertion into the first connector housing 100 so that it may come into contact with the terminal lower block for first low voltage 121-2.

The terminal for first low voltage 120 may have a protruding portion 120-2 that protrudes so that it may come into contact with the terminal block for first low voltage 121. The protruding portion 120-2 may also be understood as a terminal protruding portion. Specifically, for example, the protruding portion 120-2 may extend toward the terminal upper block for first low voltage 121-1 and protrude so that it is supported by the terminal upper block for first low voltage 121-1 when a force acts in the direction opposite to the insertion direction.

For convenience of description, the terminal lower block for first low voltage 121-2 and the terminal upper block for first low voltage 121-1 may be referred to as a first terminal block and a second terminal block, respectively.

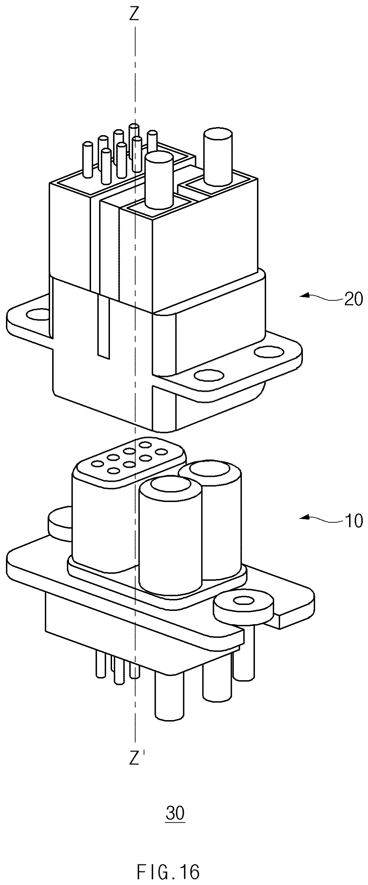

FIG. 16 is an exploded perspective view showing the connector assembly according to an embodiment of the present disclosure. The description of the above-described embodiments may be equally or similarly applied to this embodiment. FIG. 16 shows the connector assembly 30 rotated 180° around a coupling axis when compared with FIG. 6.

The first connector 10 and the second connector 20 may be coupled to form the connector assembly 30. FIG. 16 shows that the first connector 10 and the second connector 20 may form the connector assembly 30 along the coupling axis Z-Z'.

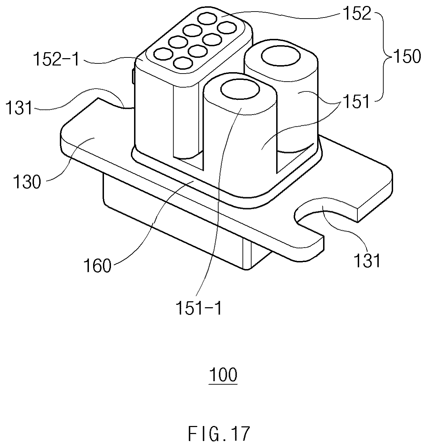

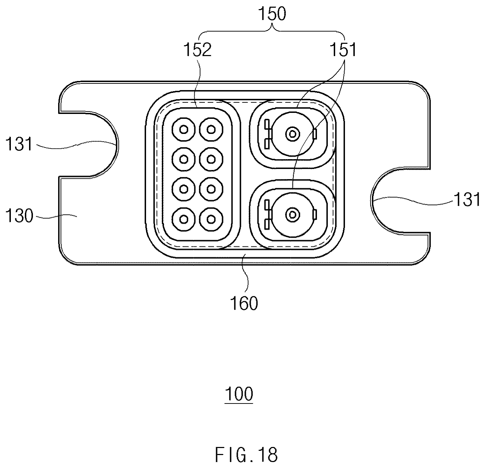

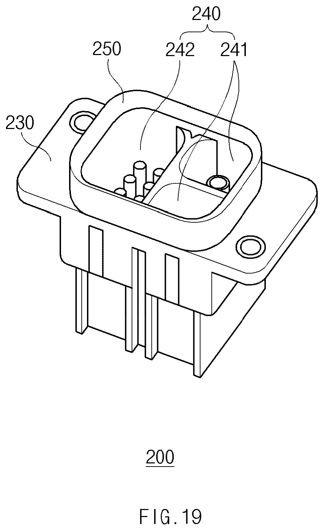

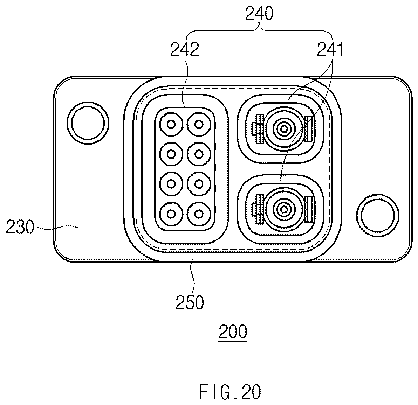

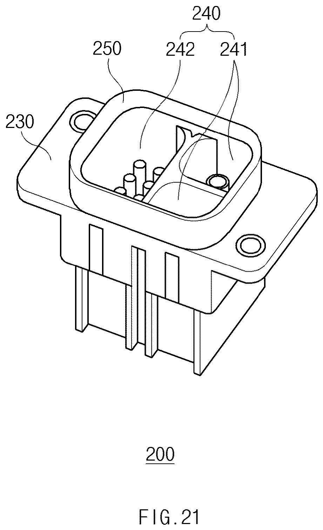

FIG. 17 is a perspective view showing the first connector housing according to an embodiment of the present disclosure, FIG. 18 is a plan view showing the first connector housing according to an embodiment of the present disclosure when viewed from above, FIG. 19 is a perspective view showing the second connector housing according to an embodiment of the present disclosure, FIG. 20 is a plan view showing the second connector housing according to an embodiment of the present disclosure when viewed from above, and FIG. 21 is a perspective view showing an inclined portion of the second connector housing according to an embodiment of the present disclosure. The description of the above-described embodiments may be equally or similarly applied to this embodiment.

The first connector 10 may include the first connector housing 100.

The first connector housing 100 may include a first body portion 130.

The first connector housing 100 may include a holding member mount portion 231. The holding member mount portion 231 may be formed in the shape of a through-hole at the edge of the first body portion 130.

The first connector housing 100 may include a first connection portion 150. For example, the first connection portion 150 may protrude toward one direction from the first body portion 130. The one direction may be an upward direction along the coupling axis Z-Z'.

The first connection portion 150 may include a first high voltage connection portion 151. For example, the first high voltage connection portion 151 may form a boundary that surrounds the terminal for first high voltage 110.

The first connection portion 150 may include a first low voltage connection portion 152. For example, the first low voltage connection portion 152 may form a boundary that surrounds the terminal for first low voltage 120.

The first high voltage connection portion 151 and the first low voltage connection portion 152 may extend in one direction, spaced apart from the body portion 130.

The first connection portion 150 may have round portions 151-1, 152-1. For example, the first high voltage connection portion 151 and the first low voltage connection portion 152 may have the round portion 151-1 and the round portion 152-1 at the end, respectively, to allow for sliding.

The first high voltage connection portion 151 and the first low voltage connection portion 152 may have the round portion 151-1 and the round portion 152-1 to slide on the inclined portion 250 to be described below.

The first connector housing 100 may include a corresponding inclined portion 160. The corresponding inclined portion 160 may have a shape corresponding to the inclined portion 250 to be described below.

The corresponding inclined portion 160 may be formed at the edge of the first connection portion 150, and have an inclination corresponding to the inclined portion 250 so that the inclined portion 250 to be described below may be seated.

The corresponding inclined portion 160 may have a perimeter that surrounds the first high voltage connection portion 151 and the first low voltage connection portion 152 when viewed from above. To put it another way, when viewed along the insertion direction (or the coupling axis Z-Z'), the first high voltage connection portion 151 and the first low voltage connection portion 152 may be disposed on the inner side of the corresponding inclined portion 160.

The second connector housing 200 may include a second body portion 230.

The second connector housing 200 may include a second connection portion 240. The second connection portion 240 may be recessed in the insertion direction of the first connection portion 150 from the second body portion 230 to accommodate the first connection portion 150.

The second connection portion 150 may include a second high voltage connection portion 241 and a second low voltage connection portion 242. The second high voltage connection portion 241 and the second low voltage connection portion 242 may have a recessed shape in the second body portion 230, corresponding to the first high voltage connection portion 151 and the first low voltage connection portion 152, respectively.

The inclined portion 250 may be formed at the edge of the second connection portion 240 and inclined to allow the first connection portion 150 to slide.

The inclined portion 250 may extend from the edge of the second connection portion 150 at an angle to the insertion direction (or the coupling axis Z-Z') in a direction facing away from the coupling axis Z-Z' of the insertion direction.

The second high voltage connection portion 241 and the second low voltage connection portion 242 may be disposed on the inner side of the inclined portion 250 when viewed along the insertion direction (or the coupling axis Z-Z').

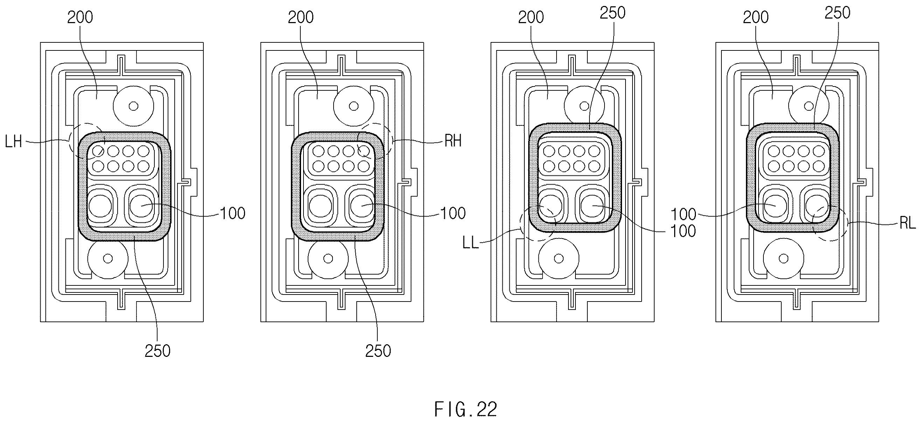

FIG. 22 is a conceptual view showing the sliding of the first connector and the second connector according to an embodiment of the present disclosure. The description of the above-described embodiments may be equally or similarly applied to this embodiment.

When the second connector 20 is mounted on the first connector 10, the mounting may be completed by the weight of the battery module assembly 3 described above.

In the pre-mounted state, when the second connector 20 is mounted on the first connector 10 by the weight of the battery module assembly 3, the first connection portion 150 of the first connector 10 may be accurately inserted into the second connection portion 240 of the second connector 20 without collision or contact.

In the pre-mounted state, when the second connector 20 is mounted on the first connector 10 by the weight of the battery module assembly 3, collision or contact may occur between the first connection portion 150 of the first connector 10 and the second connection portion 240 of the second connector 20. In this case, the first connection portion 150 may collide or contact with the inclined portion 250.

The insertion of the first connection portion 150 into the second connector 20 may be guided by the inclination of the inclined portion 250. For example, when viewed from above along the coupling axis Z-Z', the first connection portion 150 may contact the left top LH, the right top RH, the left bottom LL and the right bottom RL. An inclined surface is formed at the left top LH, the right top RH, the left bottom LL and the right bottom RL to guide the first connection portion 150 into the second connector 20.

Although the above description takes the left top LH, the right top RH, the left bottom LL and the right bottom RL as an example, the same is the case with any location of the inclined portion 250.

As the first connection portion 150 has the round portions 151-1, 152-1, it may be possible to guide the insertion more effectively with minimum damage or abrasion of the inclined portion 250.

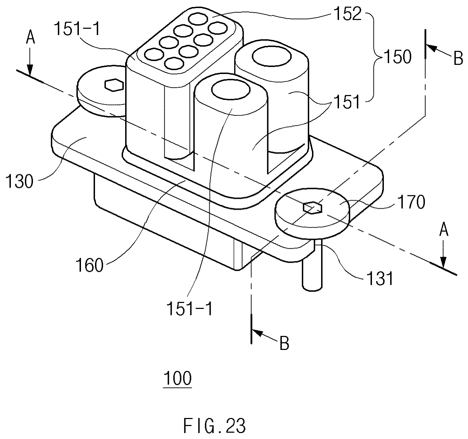

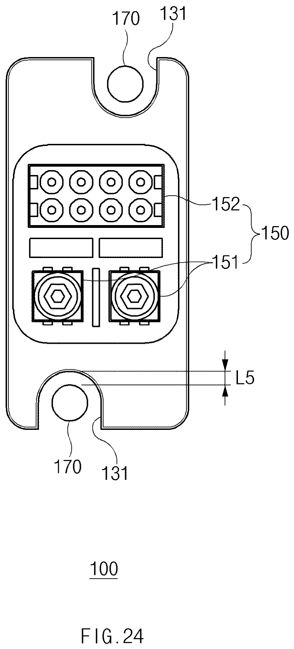

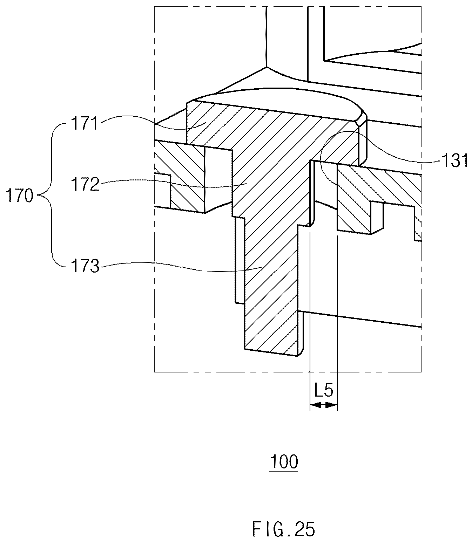

FIG. 23 is a perspective view showing a holding member mounted in the first connector housing according to an embodiment of the present disclosure, FIG. 24 is a conceptual view showing the holding member mounted in the first connector housing according to an embodiment of the present disclosure, and FIG. 25 is a partial enlarged view showing the holding member mounted in the first connector housing according to an embodiment of the present disclosure. The description of the above-described embodiments may be equally or similarly applied to this embodiment.

The first connector 10 may include the holding member 170.

The holding member 170 may be mounted in the first body portion 130 so that the first connector 10 may move within a predetermined range. For example, when the second connector 20 is mounted on the first connector 10, the holding member 170 may be mounted in the first body portion 130 so that the first connector 10 may move within the predetermined range. Specifically, the holding member 170 may be mounted in a holding member mount portion 231 of the first body portion 130.

The holding member 170 may moveably couple the first body portion 130 to the battery module assembly 3 (or the first connector mount portion 3-1) in which the first body portion 130 is mounted.

The first body portion 130 may include the holding member mount portion 131 having a through-hole in which the holding member 170 is mounted. The through-hole of the holding member mount portion 131 may have a shape including a semispherical shape. The semispherical shape may allow a first part 172 of the holding member 170 and the holding member mount portion 131 to be spaced apart from each other at a predetermined distance.

The holding member 170 may have a portion that contacts the holding member mount portion 131 and other portion that is spaced apart from the holding member mount portion 131.

The holding member 170 may include a head portion 171. For example, the head portion 171 may have a larger diameter than the through-hole and be seated on the holding member mount portion 131.

The holding member 170 may include the first part 172. For example, the first part 172 may be connected to the head portion 171 and spaced apart from the holding member mount portion 131 at a predetermined distance L5. Additionally, the first part 172 may have a length corresponding to a thickness of the first body portion 130.

The holding member 170 may include a second part 173. For example, the second part 173 may be connected to the first part 172, and have a smaller outer diameter than the first part 172. However, the second part 173 need not necessarily have a smaller outer diameter than the first part 172, and there may be no particular limitation. The second part 173 may be coupled to the battery module assembly 3 (or the first connector mount portion 3-1).

When the second connector 20 is mounted on the first connector 10, and if the first connector 10 may move within the predetermined range, it may be possible to guide the mounting of the second connector 20 on the first connector 10 with minimum damage or abrasion. To put it another way, as the first connector 10 may freely move as much as the predetermined distance L5, it may be possible to effectively guide the first connection portion 150 into the second connector 20.

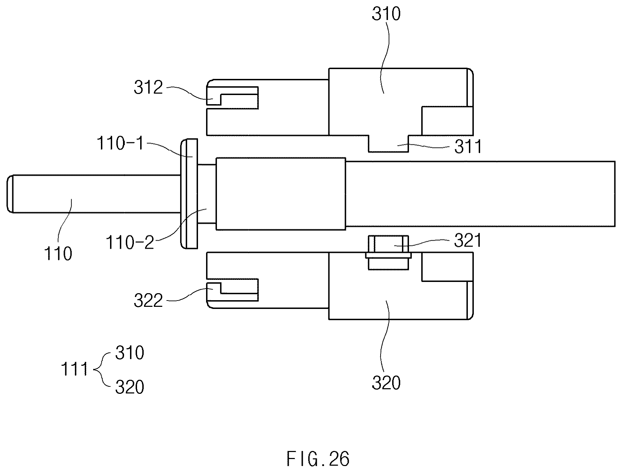

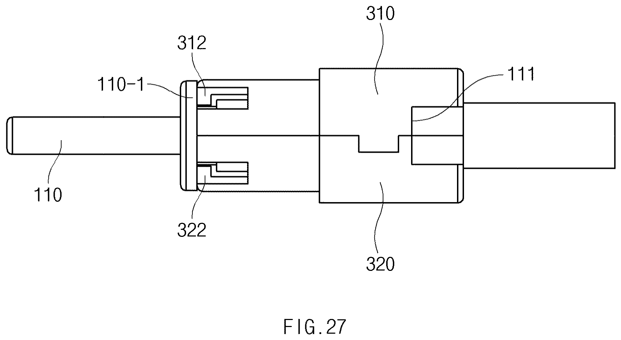

FIG. 26 is an exploded perspective view showing the terminal block for first high voltage and the terminal for first high voltage according to an embodiment of the present disclosure. FIG. 27 is a perspective view showing the terminal block for first high voltage and the terminal for first high voltage in a coupled state according to an embodiment of the present disclosure. The description of the above-described embodiments may be equally or similarly applied to this embodiment.

The terminal block for first high voltage 111 may include a first block 310. For example, the first block 310 may surround one surface of the terminal for first high voltage 110.

The terminal block for first high voltage 111 may include a second block 320. For example, the second block 320 may be coupled to the first block 310 and surround the other surface of the terminal for first high voltage 110.

The terminal block for first high voltage 111 may also surround a portion of an electrical line connected to the terminal for first high voltage 110.

The terminal for first high voltage 110 may include a groove portion 110-2. For example, the groove portion 110-2 may be a recessed portion of the terminal for first high voltage 110.

The terminal block for first high voltage 111 may include an interlock portion 312. The interlock portion 312 may be configured to fit the terminal for first high voltage 110 side end of the terminal block for first high voltage 111 into the groove portion 110-2.

The first block 310 may include a first coupling portion 311 for interference fit coupling.

The second block 320 may include a second coupling portion 321 for interference fit coupling.

The terminal block for first high voltage 111 may be mounted on the terminal for first high voltage 110 by the interference fit coupling of the first coupling portion 311 and the second coupling portion 321.

The terminal for first high voltage 110 may include the protruding portion 110-1. The protruding portion 110-1 may protrude to limit the movement of the terminal block for first high voltage 111 in the length direction of the terminal for first high voltage 110.

As the terminal block for first high voltage 111 includes the protruding portion 111-1 protruding toward the first connector housing 100, the movement relative to the first connector housing 100 may be limited.

The first connector housing 100 may support the protruding portion 111-1 to limit the movement of the terminal block for first high voltage 111 when a force acts on the terminal block for first high voltage 111 in the direction opposite to the insertion direction.

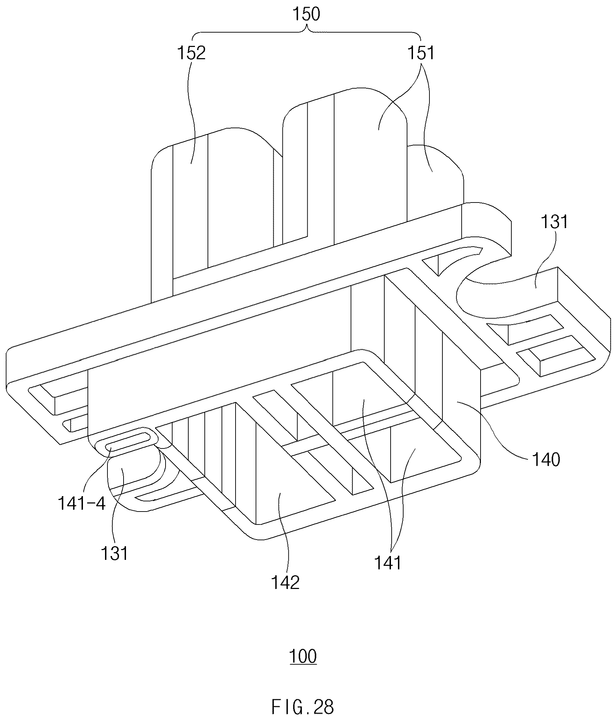

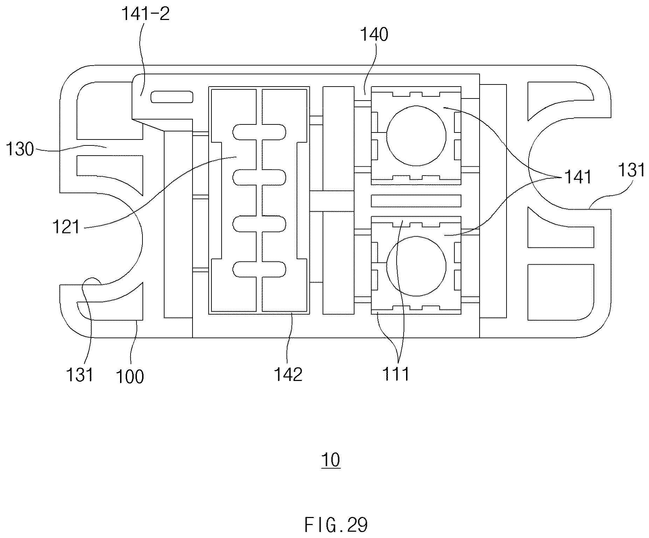

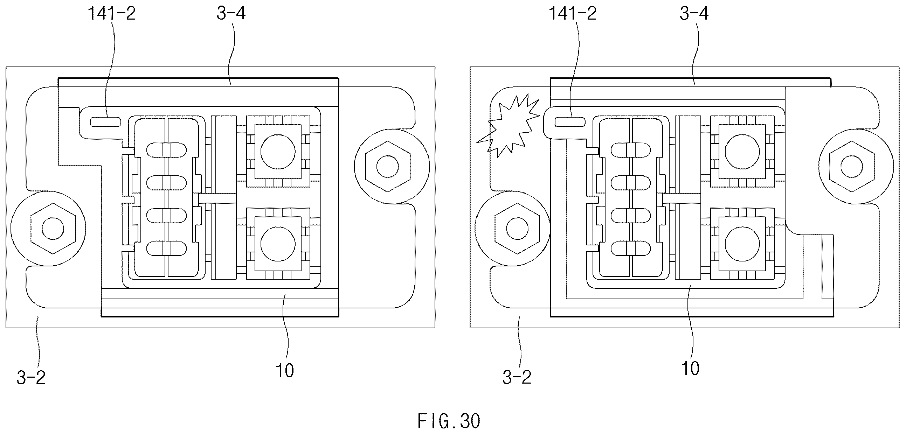

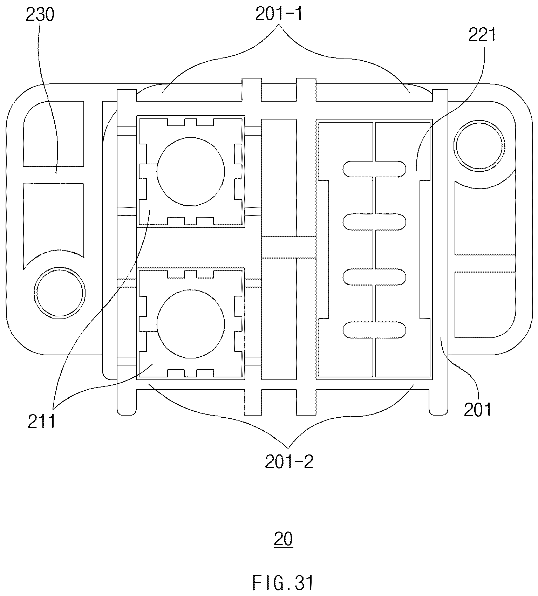

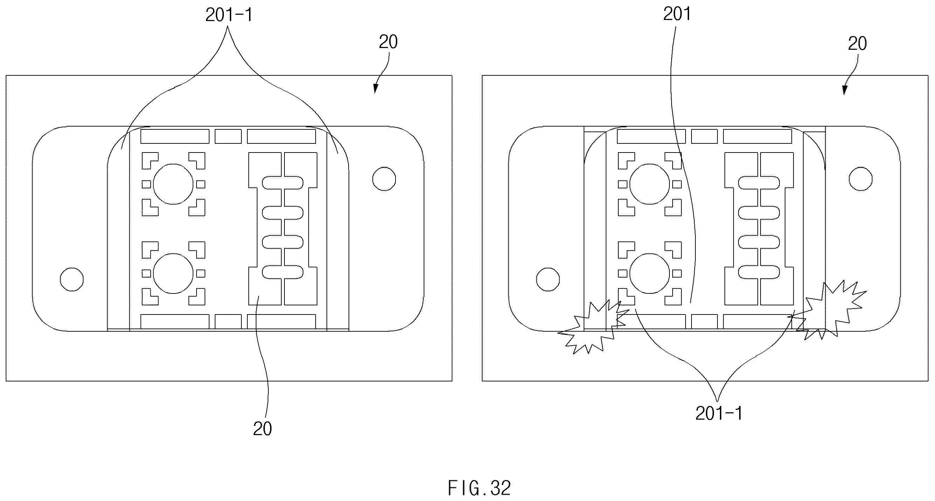

FIG. 28 is a perspective view showing the terminal block mount portion of the first connector housing according to an embodiment of the present disclosure, FIG. 29 is a bottom view showing the terminal block mount portion of the first connector according to an embodiment of the present disclosure, FIG. 30 is a conceptual view showing the first connector mounted in the first connector mount portion according to an embodiment of the present disclosure, FIG. 31 is a bottom view showing the terminal block mount portion of the second connector according to an embodiment of the present disclosure, and FIG. 32 is a conceptual view showing the second connector mounted in the second connector mount portion according to an embodiment of the present disclosure. The description of the above-described embodiments may be equally or similarly applied to this embodiment.

The description of the above-described embodiments may be equally or similarly applied to this embodiment.

As described above, the connectors 10, 20 may include the body portions 130, 230, the connection portions 150, 240 disposed on one side of the body portions 130, 230 to make an electrical connection to an external device, and the mount portions 140, 201 that are disposed on the other side of the body portions 130, 230, open to allow for insertion of the terminals 110, 120, 210, 220 and mounted in the battery module assembly 3.

The mount portions 140, 201 may be a mount portion as a terminal block mount portion, and may be also a mount portion that is mounted in the battery module assembly 3 (or the connector mount portions 3-1, 3-2).

The mount portions 140, 201 may be formed asymmetrically.

For example, the mount portion 140 may include a protruding portion 241-2 at an edge, and the protruding portion 241-2 may protrude in a direction across the edge. Specifically, the protruding portion 241-2 may extend perpendicularly to the edge, but is not limited thereto.

As another example, the mount portion 201 may have a round portion. Specifically, the mount portion 201 may have the round-shaped round portion at only one edge.

As the mount portions 140, 201 are formed asymmetrically, it may be possible to prevent mis-assembly, i.e., being mounted in the mounting hole 3-4 in a different direction from a direction designated to the connector mount portions 3-1, 3-2.

The shape of the mount portions 140, 201 is provided by way of illustration, and the mounts 140, 201 may be designed in a variety of asymmetrical shapes to prevent mis-assembly.

While the present disclosure has been hereinabove described with regard to a limited number of embodiments and drawings, the present disclosure is not limited thereto and may be embodied in different forms by persons having ordinary skill in the technical field pertaining to the present disclosure within the technical aspect of the present disclosure and the scope of the appended claims and their equivalents.

### [LIST OF REFERENCE NUMERALS]

1: Energy storage system
2: Battery control unit
3: Battery module assembly
3-1: First connector mount portion
3-2: Second connector mount portion
3-3: Module guide
3-4: Mounting hole
3-5: Guide mount portion
4: Bottom plate assembly
10: First connector
20: Second connector
30: Connector assembly
100: First connector housing
110: Terminal for first high voltage
110-1: Protruding portion
110-2: Groove portion
111: Terminal block for first high voltage
111-1: Protruding portion of terminal block for first high voltage
120: Terminal for first low voltage
120-1: First protruding portion
120-2: Second protruding portion
121: Terminal block for first low voltage
121-1: Upper block for first low voltage
121-2: Lower block for first low voltage
130: Body portion
131: Holding member mount portion
140: Terminal block mount portion
141: Terminal block mount portion for first high voltage
141-1: Stopper portion
141-2: First protruding portion
141-3: Second protruding portion
142: Terminal block mount portion for first low voltage
150: Connection portion
151: High voltage connection portion
151-1: Round portion
152: Low voltage connection portion
152-1: Round portion
160: Inclined portion
170: Holding member
171: Head portion
172: First part
173: Second part
200: Second connector housing
201: Terminal block mount portion
201-1: One edge
201-2: Other edge
210: Terminal for second high voltage
211: Terminal block for second high voltage
220: Terminal for second low voltage
221: Terminal block for second low voltage
221-1: Upper block for second low voltage
221-2: Lower block for second low voltage
230: Body portion
240: Connection portion
241: High voltage connection portion
242: Low voltage connection portion
250: Inclined portion
310: First block
311: First coupling portion
312: Interlock portion
320: Second block
321: Second coupling portion
322: Interlock portion
HVLOCK1: First locking structure for second high voltage
HVLOCK2: Second locking structure for second high voltage
LVLOCK1: First locking structure for second low voltage
LVLOCK2: Second locking structure for second low voltage

## Claims

1. An energy storage system comprising:
a first battery module assembly; and
a second battery module assembly mounted on the first battery module assembly,
wherein the first battery module assembly comprises:
a module guide provided to guide the mounting with the second battery module assembly.

2. The energy storage system according to claim 1,
wherein the module guide is formed at an edge of the first battery module assembly.

3. The energy storage system according to claim 2,
wherein the module guide extends in an upward direction from the edge.

4. The energy storage system according to claim 1,
wherein the second battery module assembly comprises a guide mount portion provided to mount the module guide.

5. The energy storage system according to claim 1,
wherein the module guide is provided in plurality.

6. The energy storage system according to claim 5,
wherein the first battery module assembly is in a shape of a rectangular prism, and
the module guides are formed at two or more of the edges of the first battery module assembly when viewed from above.

7. The energy storage system according to claim 1,
wherein the second battery module assembly comprises a first connector exposed downwards for electrical connection to the first battery module assembly,
the first battery module assembly comprises a second connector exposed upwards for electrical connection to the second battery module assembly, and
the first connector and the second connector are electrically connected to each other.

8. The energy storage system according to claim 7,
wherein the second battery module assembly comprises a guide mount portion provided to mount the module guide, and
the first connector and the second connector are spaced apart from each other at a predetermined distance when the module guide is pre-mounted in the guide mount portion.

9. The energy storage system according to claim 8,
wherein after the pre-mounting, the mounting of the first connector and the second connector is completed by the weight of the second battery module assembly.

10. The energy storage system according to claim 7,
wherein the first connector comprises a terminal for first low voltage and a terminal for first high voltage,
the second connector comprises a terminal for second low voltage and a terminal for second high voltage, and
when the terminal for first high voltage and the terminal for second high voltage come into contact with each other, the terminal for first low voltage and the terminal for second low voltage are spaced apart from each other at a predetermined distance.

11. The energy storage system according to claim 10,
wherein the predetermined distance at which the terminal for first low voltage and the terminal for second low voltage are spaced apart from each other is in a range between 1 mm and 1.5 mm.

12. The energy storage system according to claim 10,
wherein the terminal for first high voltage and the terminal for second high voltage have a larger radius than the terminal for first low voltage and the terminal for second low voltage, respectively.

13. The energy storage system according to claim 10,
wherein the terminal for first high voltage and the terminal for second high voltage have higher rigidity than the terminal for first low voltage and the terminal for second low voltage, respectively.

14. The energy storage system according to claim 10,
wherein the terminal for second high voltage is inserted into the terminal for first high voltage before the terminal for second low voltage is inserted into the terminal for first low voltage.

15. The energy storage system according to claim 14,
wherein when the terminal for second high voltage is completely inserted into the terminal for first high voltage, an overlap length is in a range between 4 mm and 5 mm, and when the terminal for second low voltage is completely inserted into the terminal for first low voltage, an overlap length is in a range between 3.5 mm and 4 mm.

16. The energy storage system according to claim 1,
wherein the module guide is provided in plurality to extend in an upward direction from the edge of the first battery module assembly, and
the second battery module assembly comprises a guide mount portion provided in plurality to mount the module guide.
